# EUROPEAN PATENT APPLICATION

(11) **EP 1 698 914 A1**
(43) Date of publication of application: **06.09.2006**
(21) Application number: 05004712.5
(22) Date of filing: 03.03.2005
(51) Int. Cl.: G02B 5/02, G02B 3/00, G02F 1/13357, B29D 11/00

(54) **Direct type backlight module with a diffuser plate and manufacturing method of said diffuser plate**

(71) Applicant: Entire Technology Co., Ltd., Jhongli City Taoyuan County (TW)
(72) Inventor: Chang, Jen-Huai, Jhongli City Taoyuan County (TW); Wang, Jyh Horng, Jhongli City Taoyuan County (TW); Hsing, Liu Chiang, Jhongli City Taoyuan County (TW)
(74) Representative: Kador & Partner

(57) **Abstract**

A direct type backlight module with a diffuser plate and manufacturing methods for said diffuser plate. The direct type backlight module is used in LCD TV. The diffuser plate is manufactured to have a plurality of columnar lenticular lens surfaces to scatter incident light to increase its uniformity which allows the light dispersant of the diffuser plate to be reduced in the range of from 30 to 50%.

## Description

### Background of the Invention

### 1. Field of the Invention

The present invention relates to direct type backlight module of diffuser plate and its manufacturing method thereof, which emphasizes on a direct backlight structure and its manufacturing method which explores a diffuser plate having a plurality of columnar lenticular lens surface scatters the light to provide a uniform and stable panel of backlight module.

### 2. Description of the Related Art

Backlight module, is also called backlight plate, provides the light for LCD panel and its emitting light source must having the characteristics of high brightness and long lifespan. The light source currently has Cold Cathode Fluorescent Lamp (CCFL), Hot Cathode Fluorescent Lamp, Light Emitting Diode (LED), Electroluminescence (EL) and son on, in which CCFL is the mainstream and has two types of direct type and side type.

LCD is personal information product for close distance use; therefore, brightness is about in a range of from 250 to 350 nits. In order to match the requirement of TV long distance watching, brightness will develop to be over 500 nits of high brightness. Because liquid crystal is self-luminescent material, it requires the light source from Lamp. The product under 20 " adopts side light source, and enhances light uniformity and efficiency by diaphragm of light guide plate and prism sheet which the using lamp tubes are about 2 to 8. Because the criteria of brightness and non-visual loss of LCD TV are higher, direct type light source becomes the mainstream for large monitor and TV.

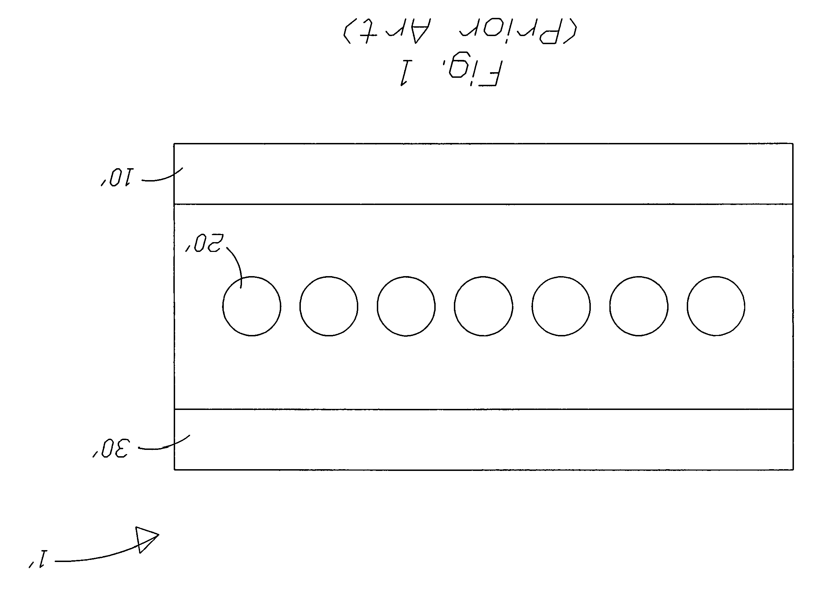

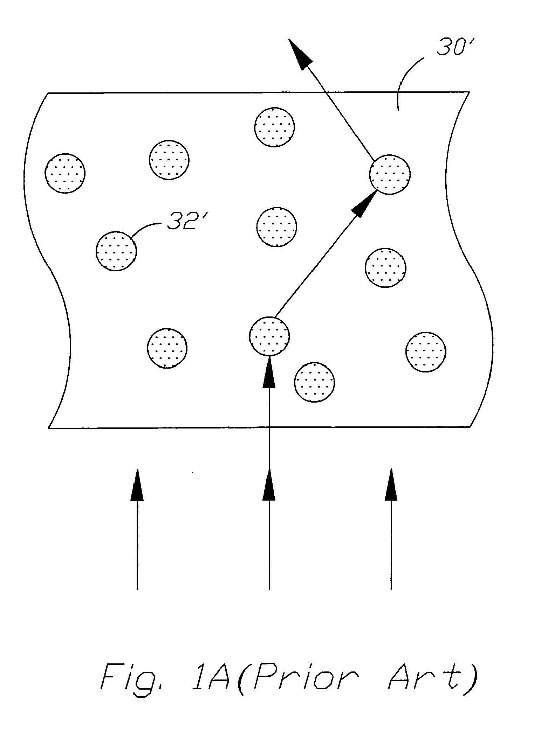

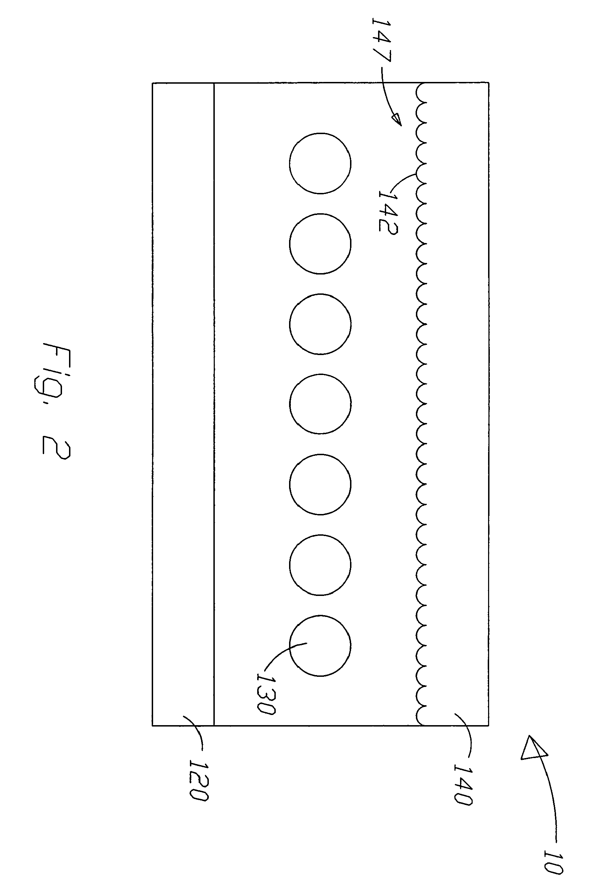

Moreover, large LCD application is mainly for note Book PC and LCD Monitor that requires the characteristics of backlight module emphasizes on lightweight, thin shape, small volume. Relatively while developing backlight for LCD TV, the criteria have to possess enough developing brightness at least over 450cd/m2, broad viewing degree (current selling products achieving 170 degree), fresh image contrast (current LCD TV about 500:1; PDP about 1000:1), and lifespan fitting criteria (current product test value is about 60 thousand hours). Under the above aforementioned criteria considering, direct type backlight module becomes the technology mainstream applying for large LCD TV. The primary concept of its design is to satisfy the requirement of higher brightness. And the technical module is that side light which was used for reducing weight and thickness of module is scattered uniformly by direct type light and transformed into flat light source to enter into liquid crystal panel. The product structure of "Direct type backlight module" is showing as Fig. 1, which is a structure diagram of direct type backlight module of prior art. The direct type backlight module 1' comprising of a reflector 10', a plurality of light source 20', and a diffuser 30'. Refer to Fig. 1A., which is a rout diagram of light moving within diffuser plate of prior art, shows that when the light enters into the diffuser plate 30' and contacts a plurality of light dispersant 32' within said diffuser plate 30', the light becomes non-directional scattering, even is absorbed by light dispersant 32'.

The characteristics of technology of direct type module express as follows:
1. Low uniformity
   The reason is that while using direct type backlight nodule is to satisfy the requirement of high brightness, then the size of module is considering point for relatively sacrifice, therefore, more lamp tubes tend to cause in a situation of lightness and darkness stripe and have a certain influence on uniformity.
2. Thick module thickness
   Although more lamp tubes increase luminance, the thermal energy resulted from lamp tube is relatively high which easily to cause in color change under different color temperature to high sensitivity liquid crystal molecular and color photo resist. Direct type backlight module usually deepens its thickness to adjust the way of depth to match the specification requirements of lamp tubes and whole luminance.
3. High light efficiency
   Direct type backlight avoids the side light which causes in part light loss and side smear light, and using aluminum backing plate to reflect stray light to output windows which enhances the whole light energy efficiency.
4. Fewer assembly parts category
   It can be observed from Fig. 1 that explores significantly reducing the use of light guide plate of side backlight module. Because the function of light guide plate in the side backlight module is to generate repetitional reflection of side CCFL light source or LED point light source by using dot pattern structure on light guide plate to derive uniform light source, direct type light is injected from below and its flat light source is only required the diffuser to accomplish without light guide plate inducted. For prism sheet part, after increasing lamp tubes and strengthening luminance, it can be considered to remove prism sheet to avoid the limitation of viewing angle after focusing the light and influence the specification requirement of viewing angle to large panel, especially for LCD TV. On the whole, direct type backlight module requiring assembly parts category is less than side type one, but the amount of CCFL is relatively increasing.

Direct backlight module is an important device for light uniform scattering that uses diffuser plate to replace light guide plate of side type emitting light. Diffuser plate meaning light scattering is the primary function, such as light box, light signboard, even the light box which using for X-ray examination in the hospital, that all use the similar diffuser plate to scatter the light uniformly. That causes in good effect on light scattering. However, the diffusion efficiency of early diffuser plate fit the requirement, the light transmission ratio and uniformity is still not enough to use for display application, whose defect is the insufficient brightness. Generally speaking, the transmission rate of the whole light area of these diffuser plates is in a range of from 30 to 50% that has already not satisfied the requirements, under the trend of high brightness of display. Japanese diffuser plate manufacturers devote to solve these defects recently, by adding different categories of light dispersant and under the strict control for process, the light transmission efficiency and uniformity has successfully improved. Although transmission rate has increased in a range from 50 to 70%, the more requirements of transmission rate for LCD do not satisfied by the customers, besides, the cost of light dispersant still maintain high.

Therefore, direct type is the only choice for backlight of LCD TV is because the characteristics of LCD TV require high uniformity and high efficiency of light diffusion effect to provide stable and uniform light for said liquid crystal panel. The required technology emphasizes on high transmission rate and high diffusion of diffuser plate nowadays.

Therefore, to propose a direct type backlight module of diffuser plate and its manufacturing method thereof, according to the aforementioned problems, which enables to solve the defects of low transmission rate and low diffusion caused from too much conventional light dispersant. Based on the inventor engaging on the research and develop and sales experiences for the related products for many years, the inventor finally proposes a method to solve the aforementioned problems for a structure of direct type backlight module of diffuser plate and its manufacturing method thereof.

### Summary of the Invention

It is an object of the present invention to provide a structure of direct type backlight module of diffuser plate and its manufacturing method thereof, wherein provides a direct type backlight module and the direct type backlight module explores employing a plurality of columnar lenticular lens surface of diffuser plate to scatter a incident light to a emitting light through the diffuser plate to achieve a high uniformity and high transmission light for LCD TV.

It is another object of the present invention to provide a structure of direct type backlight module of diffuser plate and its manufacturing method thereof, wherein provides a direct type backlight module and the direct type backlight module explores employing a plurality of columnar lenticular lens surface of diffuser plate. Because employing the diffuser plate enables to deduce the amount of light dispersant to enhance its light transmission rate, besides, it can reduce the manufacturing cost due to light dispersant being reduced.

It is yet another object of the present invention to provide a structure of direct type backlight module of diffuser plate and its manufacturing method thereof, wherein provides a direct type backlight module and the direct type backlight module explores employing a plurality of columnar lenticular lens surface of diffuser plate or two side columnar lenticular lens surface of diffuser plate. Through vertical or horizontal lenticular lens of said two side columnar lenticular lens surfaces to adjust the diffusion degree of said emitted light in every direction and to control light scattering to some direction that can match the different requirement and design for display.

It is still yet another object of the present invention to provide a structure of direct type backlight module of diffuser plate and its manufacturing method thereof, wherein provides a manufacturing method of direct type backlight module. Through a way of extruding, casting, or coating to form the direct type backlight module of diffuser plate that is a simple and low-cost manufacturing method.

In order to perform the aforementioned purposes, efficiency and characteristics of each, the present invention is a structure of direct type backlight module of diffuser plate and its manufacturing method thereof and explores that direct type backlight module applied for LCD TV. To manufacture direct type backlight module of diffuser plate having a plurality of columnar lenticular lens surface of diffuser plate to scatter a incident light to increase its light uniformity and reduce amount of the light dispersant in a range of from 30 to 50% to enhance light transmission rate. Besides, through vertical or horizontal lenticular lens of two-side columnar lenticular lens surfaces adjust the diffusion degree in every direction. The manufacturing method of the present invention does not increase the complexity of said fabrication but benefit to manufacturing.

### Brief Description of the drawings

Fig. 1 is a sectional view showing direct type backlight module of prior art.
Fig. 1A is diagram showing a light proceeding route within diffuser plate of prior art.
Fig. 2 is a sectional diagram showing direct type backlight module of LCD TV of preferred embodiment of the present invention.
Fig. 2A is a route diagram showing a light entering into the diffuser plate of preferred embodiment of the present invention.
Fig. 3A is a sectional view of diffuser plate of preferred embodiment of the present invention.
Fig. 3B is a sectional view of diffuser plate of another preferred embodiment of the present invention.
Fig. 4A is a 3D image of diffuser plate of preferred embodiment of the present invention.
Fig. 4B is a 3D image of diffuser plate of another preferred embodiment of the present invention.
Fig. 5A is a manufacturing flow chart of diffuser plate of preferred embodiment of the present invention.
Fig. 5B is a manufacturing flow chart of diffuser plate of another preferred embodiment of the present invention.
Fig. 5C is a manufacturing flow chart of diffuser plate of another preferred embodiment of the present invention.

### Detailed Description of the Preferred Embodiments

In order to clearly express and explore the feature characteristics and efficiency of the present invention for the committee of patent, the preferred embodiment and detailed description is as below.

The present invention is to solve the defects of high price of light dispersant which is applied for diffuser plate of prior art. The present invention enables to increase light diffusion value and reduce in a range of from 30 to 50% content of light dispersant. Not only transmission rate is increased which resulted from absorption or reflection of light dispersant, but also the manufacturing cost is reduced and light of light dispersant is presented irregular scattering effect. The structure of the diffuser plate of the present invention can control light scattering to some direction that can match the different requirement and design for display.

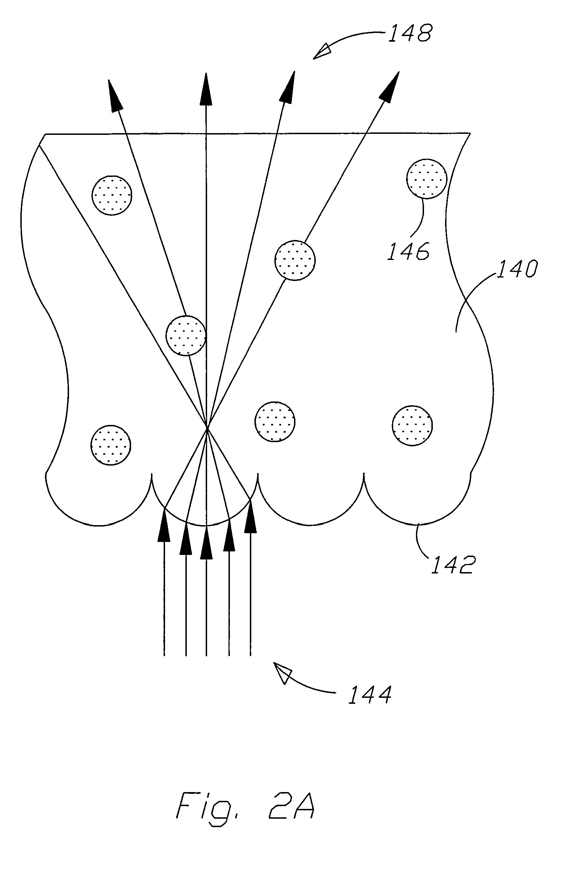

Refer to Fig. 2, which illustrates the structure diagram of one of the preferred embodiment of direct type backlight for LCD TV. As Fig. 2 showing, the present invention illustrates the structure of direct type backlight of LCD TV, the main structure of said direct type backlight module 10 consisting of a reflector 120, a plurality of light source 130, and a diffuser plate 140 locating above said light source 130 and having at least a wavy surface 142, wherein a incident light injected into the diffuser plate 140 enables to scatter the emitted light to be scattered and uniformity through the diffuser plate 140 with a plurality of columnar lenticular lens surface 142.

Refer to Fig. 2A, which illustrate a route diagram of light injecting into the diffuser plate of one of the preferred embodiment of the present invention. While a incident light 144 injecting into diffuser plate 140 of said columnar lenticular lens surface 142, the incident light 144 generated the effect of scattering, then through a plurality of light dispersant 146 to increase the effect of diffusion which results in a emitted light 148 having diffusion effect. Therefore, while the incident light 144 injecting into the diffuser plate 140 through the diffuser plate 140, the incident light 144 has been scattered, then through the light dispersant 146 increasing the diffusion effect.

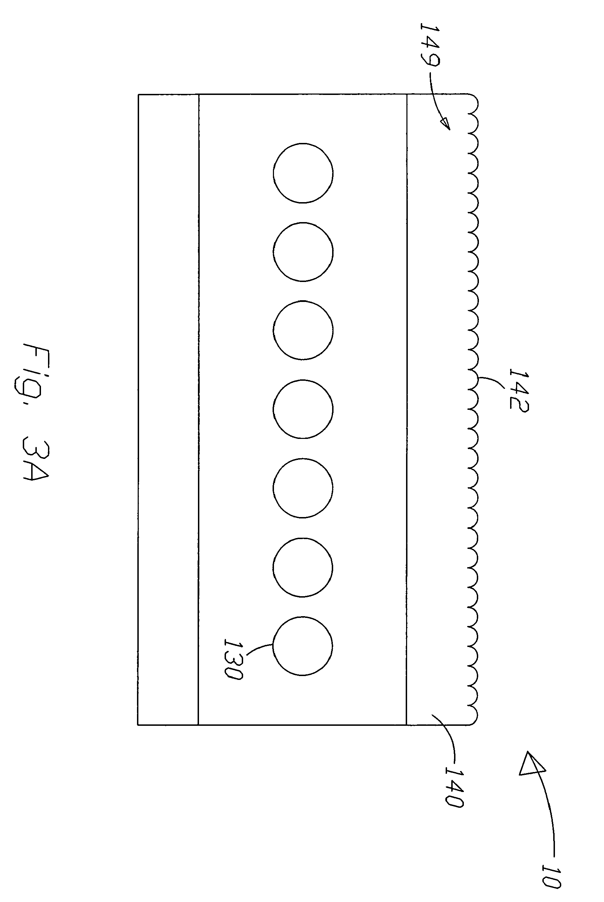

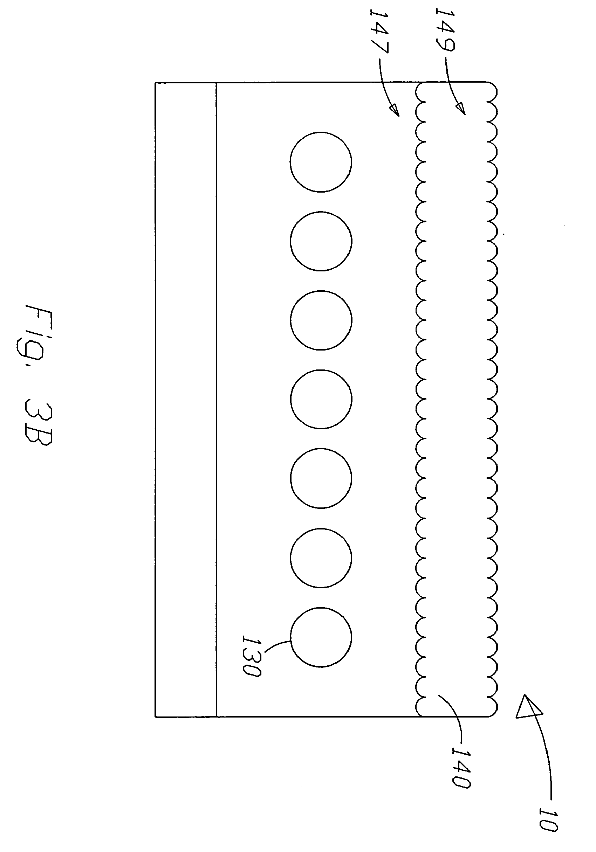

Refer to Fig. 3A and 3B, which illustrates the structure diagram of one of the preferred embodiments of diffuser plate and the other of the preferred embodiments of diffuser plate. The diffuser plate 140 of direct type backlight module of the present invention applied for LCD TV having a plurality of columnar lenticular lens surface 142 locates above the light source 130. As Fig. 3A showing, wherein the a plurality of columnar lenticular lens surface 142 can locate on the exit facet 149 of the diffuser plate 140, in addition, as Fig. 3B showing, the columnar lenticular lens surface 142 can locate on the entrance facet 147 and exit facet 149 of said diffuser plate 140.

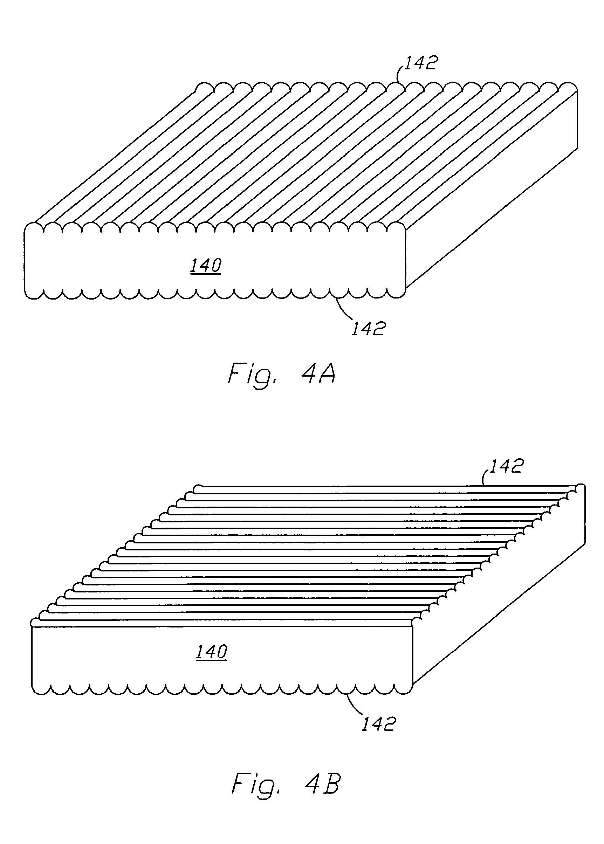

In addition, refer to fig. 4A and 4B, which is a 3D image of diffuser plate of one of the preferred embodiment and another preferred embodiment. The columnar lenticular lens surface 142 of said diffuser plate 140 can locate on the entrance facet 147 or exit facet 149 of said diffuser plate (as Fig. 2 and fig. 3A). Refer to fig. 4A and 4B, when the diffusion light intends to be controlled to scatter to some direction, the columnar lenticular lens can be presented in vertical or horizontal lenticular located on the two side of said diffuser plate 140.

Refer to Fog. 5A, which is a manufacturing flow chart of diffuser plate of the preferred embodiment and expresses a manufacturing method of direct type backlight module of diffuser plate, wherein the diffuser plate comprising the steps of:
Step 500: preparing a resin;
Step 510: squeezing forming the resin through a extruder; and
Step 520: cooling forming the resin through two cooling roll.

Among step 520, the two cooling roll comprise at least one cooling roll having a plurality of columnar lenticular lens surface. While forming resin, it has a plurality of columnar lenticular lens surface.

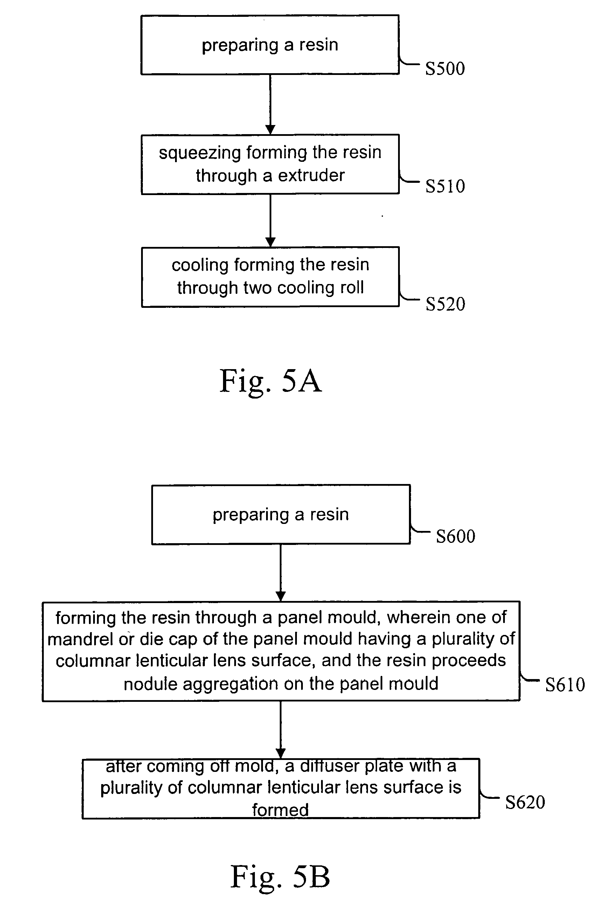

Refer to Fig. 5B, which is a manufacturing of diffuser plate of another preferred embodiment. A manufacturing method of a direct type backlight of diffuser plate, wherein the diffuser plate comprising the steps of:
Step 600: preparing a resin;
Step 610: forming the resin through a panel mould, wherein one of mandrel or die cap of the panel mould having a plurality of columnar lenticular lens surface, and the resin proceeds nodule aggregation on the panel mould; and
Step 620: after coming off mold, a diffuser plate with a plurality of columnar lenticular lens surface is formed.

Among step 620, both said mandrel and die cap have a plurality of columnar lenticular lens surface to form two side of diffuser palate with a plurality of columnar lenticular lens surface.

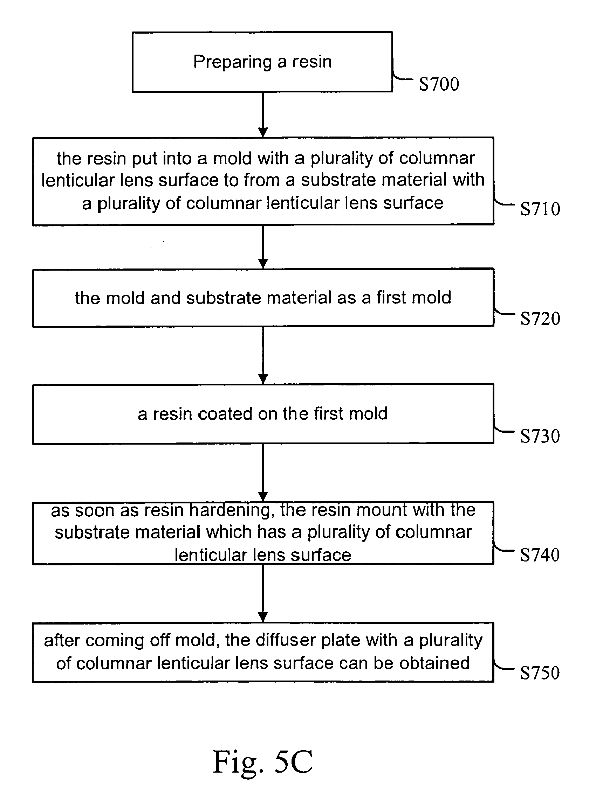

Refer to Fig. 5C, which is a manufacturing flow chart of diffuser plate of another preferred embodiment. A manufacturing method of a direct type backlight of diffuser plate, wherein the diffuser plate comprising the steps of:
Step 700: preparing a resin;
Step 710: the resin put into a mold with a plurality of columnar lenticular lens surface to from a substrate material with a plurality of columnar lenticular lens surface;
Step 720: the mold and substrate material as a first mold;
Step 730: a resin coated on the first mold;
Step 740: as soon as resin hardening, the resin mount with the substrate material which has a plurality of columnar lenticular lens surface; and
Step 750: after coming off mold, the diffuser plate with a plurality of columnar lenticular lens surface can be obtained.

The diffuser plate has a manufacturing method of two-side columnar lenticular lens surface, and its step repeats step 700.
While certain preferred embodiments of the present invention have been disclosed in detail, it is to be understood that various modifications may be adopted without departing from the spirit of the invention or scope of the following claims.

## Claims

1. A direct type backlight module of diffuser plate comprising the main structure of:
a diffuser plate, locating above a plurality of lamp tubes, having a pluralityof columnar lenticular lens surface;
wherein a incident light entering into said diffuser plate can be scattered through a plurality of columnar lenticular lens surface of said diffuser plate to make a emitted light diffusion and uniformity.

2. The diffuser plate structure of direct type backlight module in accordance with claim 1, wherein the inner of said diffuser plate comprises of a plurality of light dispersant.

3. The diffuser plate structure of direct type backlight module in accordance with claim 1, wherein said columnar lenticular lens surface of diffuser plate is a shape with said incident light proceeding light scattering.

4. The diffuser plate structure of direct type backlight module in accordance with claim 1, wherein said columnar lenticular lens surface of diffuser plate can locate an entrance facet and an exit facet of said diffuser plate.

5. The diffuser plate structure of direct type backlight module in accordance with claim 4, wherein said columnar lenticular lens surface of he entrance facet and exit facet of diffuser plate can present horizontal facet.

6. The diffuser plate structure of direct type backlight module in accordance with claim 5, wherein said columnar lenticular lens surface of said entrance facet and exit facet of diffuser plate can present vertical facet.

7. The diffuser plate structure of direct type backlight module in accordance with claim 1, wherein said diffuser plate is selected from one of acrylic resin, epoxy resin, transparent heat hardening resin or UV hardening resin.

8. A manufacturing method of direct type backlight of diffuser plate comprising the steps of:
preparing a resin;
squeezing forming said resin through a extruder; and
cooling forming said resin through two cooling roll;
wherein said two cooling roll comprises at least a cooling roll having a a plurality of columnar lenticular lens surface, and while forming resin, it has a plurality of columnar lenticular lens surface.

9. A manufacturing method of direct type backlight of diffuser plate comprising the steps of:
preparing a resin;
forming said resin through a panel mould,wherein one of mandrel or die cap of said panel mould having a plurality of columnar lenticular lens surface, and said resin proceeds nodule aggregation on said panel mould; and
after coming off mold, a diffuser plate with a plurality of columnar lenticular lens surface being formed.

10. The manufacturing method of direct type backlight of diffuser plate module in accordance with claim 9, wherein both said mandrel and die cap have a plurality of columnar lenticular lens surface.

11. A manufacturing method of direct type backlight of diffuser plate comprising the steps of:
preparing a resin;
putting said resin into a mold with a plurality of columnar lenticular lens surface to from a substrate material with a plurality of columnar lenticular lens surface;
using said mold and substrate material as a first mold;
coating a resin on said first mold;
hardening said resin as soon as, said resin mount with the substrate material which has a plurality of columnar lenticular lens surface; and
after coming off mold, the diffuser plate with a plurality of columnar lenticular lens surface being obtained.

12. The manufacturing method of direct type backlight of diffuser plate module in accordance with claim 11, wherein said diffuser plate has a manufacturing method of two-side a plurality of columnar lenticular lens surface, whose step repeat the eleventh step.
